# EUROPÄISCHE PATENTSCHRIFT

(11) **EP 0 295 517 B1**
(45) Veröffentlichungstag und Bekanntmachung des Hinweises auf die Patenterteilung: **10.11.1993**
(21) Anmeldenummer: 88108956.9
(22) Anmeldetag: 04.06.1988
(51) Int. Cl.: C08K 3/34, C08L 51/04

(54) **Matte, elastisch-thermoplastische ABS-Formmassen**
Matt, elastic-thermoplastic ABS molding mass
Masses à mouler ABS, mates, élastiques, thermoplastiques

(30) Priorität: 17.06.1987 DE 3720210
(43) Veröffentlichungstag der Anmeldung: 21.12.1988
(73) Patentinhaber: BAYER AG, 51368 Leverkusen (DE)
(72) Erfinder: Schumann, Werner, Dipl.-Ing., D-5024 Pulheim (DE); Tischer, Werner, Dipl.-Ing., D-4047 Dormagen 11 (DE); Liedtke, Wolfgang, Dipl.-Ing., D-4047 Dormagen (DE); Richter, Klaus, D-5000 Köln 80 (DE)

(56) Entgegenhaltungen:
- EP-A- 0 256 538
- US-A- 3 523 096
- US-A- 4 711 916
- ULLMANNS ENZYKLOPÄDIE DER TECHN. CHEMIE, 4. Auflage, Verlag Chemie, 1982; Band 21, Seiten 498-499; Band 13, Seiten 650-652#
- RUBBER TECHNOLOGY AND MANUFACTURE, 2. Auflage, Butterworths, 1985#
- RÖMPPS CHEMIE-LEXIKON, 8. Auflage, Franckh'sche Verlagshandlung, 1979#

## Beschreibung

Gegenstand der Erfindung sind elastisch-thermoplastische Formmassen, enthaltend mindestens ein Pfropfpolymerisat harzbildender Monomerer auf einen Kautschuk und gegebenenfalls weitere thermoplastische Kunststoffe, die gekennzeichnet sind durch einen Gehalt von 0,1 bis 5 Gew.-%, bezogen auf die Formmasse einer hydrophobierten Kieselsäure, vorzugsweise 0,2 - 2,0 Gew.-%.

Ein weiterer Gegenstand der Erfindung ist die Verwendung dieser Formmassen zur Herstellung von Formkörpern, insbesondere von Folien und Überzügen mit einheitlich matter Oberfläche bei nahezu unveränderten mechanischen Eigenschaften.

Als Ausgangsmaterial für die erfindungsgemäßen Formmassen werden Pfropfpolymerisate harzbildender Monomerer auf mindestens teilvernetzte Kautschuke eingesetzt, in denen der Kautschuk ein Dienkautschuk wie Polybutadien, Polyisopren, Butadien/Styrolcopolymerisat, ein Acrylatkautschuk wie Poly-n-butylacrylat oder EPDM-Kautschuk (aus Ethylen, Propylen und einem nichtkonjugierten Dien) ist. Die Kautschuke werden auch als Pfropfbasis bezeichnet.

Harzbildende Monomere, im folgenden auch Pfropfmonomere, sind bevorzugt Styrol, kern- oder seitenketten substituierte Styrole, Acrylnitril, Methylmethacrylat oder Mischungen daraus. Bevorzugt ist ein Gemisch aus Styrol (50 bis 90 Gew.-%) und Acrylnitril (50 bis 10 Gew.-%). Im allgemeinen enthalten die Pfropfcopolymerisate 10 bis 80 Gew.-% Kautschuk, bevorzugt 10 bis 50 Gew.-%. Diese Pfropfpolymerisate sind bekannt und ihre Herstellung ist Stand der Technik. Im allgemeinen erhält man solche Pfropfpolymerisate durch Polymerisation der Monomeren in Anwesenheit des Kautschuks mit Hilfe von radikalischen Initiatoren. Die Pfropfpolymerisation ist im allgemeinen nicht vollständig. Es entstehen neben den chemisch an den Kautschuk gebundenen "Pfropfästen" auch freie Copolymerisate der Pfropfmonomeren. Erhalten wird also in der Regel ein Gemisch aus dem eigentlichen Pfropfpolymerisat und freiem Copolymerisat. In vielen Fällen setzt man zur Beeinflussung der Eigenschaften des Materials weiteres Copolymerisat zu.

Alle diese Profukte werden im folgenden als ABS-Kunststoffe bezeichnet. Dieser Begriff steht an sich für Acrylnitril-Butadien-Styrol-Kunststoffe. Er wird aber hier so verstanden, daß er auch ähnliche Materialien, d.h. Pfropfpolymerisate mit anderen Kautschuken als Polybutadien, als Pfropfbasis und anderen Pfropfmonomeren als Styrol und Acrylnitril einschließt sowie auch die Mischungen solcher Pfropfpolymerisate mit freien Copolymerisaten der Pfropfmonomeren.

ABS-Kunststoffe können als solche erfindungsgemäß als Ausgangsmaterial dienen. Es ist aber auch möglich, sie mit weiteren thermoplastischen Kunststoffen z.B. aromatischen Polycarbonaten, Polyamiden, Polymethylmethacrylaten, Polyvinylchlorid, Ethylen/Vinylacetat-Copolymerisaten, Polyethylen zu mischen, wobei der ABS-Anteil aber mindestens 50 Gew.-% des Gemischs ausmachen muß.

Durch Zusatz eines Nitril-Kautschuks, d.h. eines Copolymerisats von Acrylnitril und Butadien in einer Menge von 5 bis 50 Gew.-%, vorzugsweise 10-30 Gew.-%, zu dem Formmassen-Ausgangsmaterial können dessen mechanische und optische Eigenschaften noch weiter verbessert werden. Es ist ebenso möglich, den Nitril-Kautschuklatex mit dem beschriebenen Pfropflatex einer Cofällung zu unterwerfen und das getrocknete Material als Zusatz zur Verbesserung der Mattierung und des Eigenschaftsniveaus einzusetzen.

Erfindungsgemäß in den Formmassen enthaltene hydrophobierte Kieselsäuren sind an sich bekannt. Sie können z.B. durch Mischen von Schwefelsäure und Natriumsilikat und Aufarbeitung (Waschen, Trocknen, Mahlen, Klassieren) des so gewonnenen sogenannten Hydrogels erzeugt werden. Zur Hydrophobierung werden bestimmte Wachse, z.B. Polyethylen- bzw. Polypropylen-Wachse, zugesetzt und beim Mahlen eingearbeitet.

Die hydrophobierten Kieselsäuren können zur Bildung der Formmassen in die ABS-Kunststoffe bzw. deren Gemische mit anderen Thermoplasten in üblicher Weise über die Schmelze eingearbeitet werden. Im einfachsten Fall verwendet man als Mischvorrichtung einen Schnecken-Extruder oder Innenkneter, der mit den Kunststoffen und den hydrophobierten Kieselsäuren beaufschlagt wird und der die Formmasse als granulierbaren Strang liefert.

Den Formmassen können natürlich die üblichen Zusätze zugefügt werden wie Alterungsstabilisatoren, Farbpigmente, Antistatika, Flammschutzmittel, UV-Stabilisatoren, Glasfasern.

Durch thermoplastische Verformung können aus den erfindungsgemäßen Formmassen Formkörper jeder Art hergestellt werden. Geeignete Verfahren zur Verformung sind z.B. Spritzgießen, Extrudieren, Coextrudieren und Tiefziehen. In allen Fällen haben die Formkörper eine völlig gleichmäßige matte Oberfläche von hervorragender Qualität. Im übrigen sind die Eigenschaften der Formkörper natürlich bestimmt durch die Eigenschaften des zugrunde liegenden Kunststoffmaterials, wobei trotz des Mattierungszusatzes die mechanischen Eigenschaften des Ausgangsmaterials annähernd erhalten bleiben. Insbesondere eignen sich die Formmassen zur Herstellung von Folien durch Gießen, Extrudieren und Blasen. Auch die Folien haben völlig gleichmäßige matte Oberflächen. Formkörper ohne Zusatz besitzen einen Glanzgrad von 85 - 95%, gemessen mit einem multi gloss-Glanzgrad-Meßgerät der Fa. Byk unter einem Meßwinkel von 60° (geeicht nach DIN 67530). Formkörper mit Mattierungszusatz besitzen Glanzgrade von 5-40 %, je nach Verarbeitungsverfahren. Unter dem Glanzgrad versteht man den Anteil an reflektiertem Licht, welches von der Probenoberfläche zurückgeworfen wird (max. 100 %).

In einer besonderen Ausführungsform gelingt es, dünne Folien durch Foliengießen herzustellen. Hierzu muß man bestimmte Trennmittel einsetzen. Man erhält trotz der geringen Dicke (5 - 100 µm) Monofolien, die sich von den Trägersubstraten ablösen lassen.

In den folgenden Beispielen sind Teile immer Gewichtsteile.

### Ausführungsbeispiel

### 1) Rezeptur

Zur Herstellung der Formmasse werden vermischt und anschließend in einem Innenkneter homogenisiert:
60 Teile:
Acrylnitril-Butadien-Styrol-Terpolymerisat und Acrylnitril-Butadien-Copolymerisat im Gewichts-Verhältnis 80:20
40 Teile:
Acrylnitril-Styrol-Copolymerisat
2,0 Teile Pentaerythrittetrastearat (PETS)
0,5 Teile Magnesiumstearat
0,2 Teile Silikonöl
0,5 Teile hydrophobierte Kieselsäure
1,0 Teile Ruß (Farbpigment)

### 2) Homogenisierung der Formmasse

Die Formmasse wird in einem Banbury-Innenkneter homogenisiert.

Die Hauptbestandteile des Banbury-Innenkneters der Fa. Pomini-Farrel sind:
a) Ein pneumatisch gesteuerter Stempelzylinder, der das zu mischende Material in die Kammer drückt und es während des Mischvorganges in der Kammer hält,
b) Fülltrichter: Sämtliches Mischmaterial wird durch die geöffnete Klappe gedrückt,
c) Mischkammer: Die Kammermäntel sind für Wasser, Dampf, bzw. sonstige Beheizungen vorgerichtet,
d) Zwei Rotoren für den Mischvorgang,
e) Klappsattel zum Auswerfen der Schmelze.

Die pulverförmige Mischung wird durch den Fülltrichter in den Innenkneter gegeben und der Stempelzylinder abgesenkt (Stempeldruck 2,5 bar). Nach 1 - 2 Minuten ist das Pulver geschmolzen. Im Minutenrhythmus wird der Stempelzylinder 3 Mal kurzzeitig be- und entlastet (Schmelztemperatur ca. 180°C). Die homogenisierte Schmelze wird nun ausgetragen, auf einer Walze zu einem Band gewalzt und anschließend das Band granuliert.

### 3) Verarbeitung der Formmasse

Die so erhaltene Formmasse wird
a) Auf einem Einwellen-Extruder zu hochmatten Folien der Dicke 100 - 1000 µm extrudiert. (Glanzgrad: 5 - 10%).
b) Auf einer Spritzgußmaschine (Fabrikat Arburg) zu Formkörpern verarbeitet. (Glanzgrad: 10-40 %).
   An diesem Produkten wurden bestimmt:
   Kerbschlagzähigkeit nach DIN 53453; ak >20 kJ/m²
   Schlagzähigkeit nach DIN 53453; an -40° C >75 kJ/m²
   Kugeldruckhärte nach DIN 53456; hk >60 N/mm²
   Erweichungstemperatur nach DIN 53460; Vicat B >95°C
   Schmelzviskosität nach DIN 53735; MVI >3 g/10min.
c) In Methylenchlorid gelöst und die Lösung auf einer Trommelgießmaschine oder Bandgießmaschine zu einer hochmatten 5 - 10 µm dicken Folie vergossen.
   Bandgießmaschine und Trommelgießmaschine (Glanzgrad: 10 - 20%).
   Die Lösung wird wie folgt hergestellt:
   4 Teile hydrophobierte Kieselsäure werden in 375 g CH₂Cl₂ vorgelegt und 2 h in einem 500 ml-Rührkolben gerührt. Danach 125 g Pulver obiger Rezeptur oder compoundierter Formmasse eintragen und 2 h bei Raumtemperatur rühren lassen. Danach 5 ml Hexyldecylphosphat (Trennmittel) zusetzen und nochmals 30 Minuten rühren lassen.

## Patentansprüche

1. Elastisch-thermoplastische Formmassen, enthaltend mindestens ein Pfropfpolymerisat harzbildender Monomerer auf einen Kautschuk, gegebenenfalls weitere thermoplastische Kunststoffe, gekennzeichnet durch einen Gehalt von 0,1 bis 5 Gew.-%, bezogen auf Formmasse einer hydrophobierten Kieselsäure.

2. Elastisch-thermoplastische Formmassen gemäß Anspruch 1 enthaltend zusätzlich einen Nitrilkautschuk.

3. Verwendung der Formmassen gemäß Anspruch 1 zur Herstellung von Formkörpern, insbesondere Folien und Überzügen mit einheitlich matter Oberfläche bei nahezu unveränderten Eigenschaften.

## Claims

1. Elastic-thermoplastic moulding compounds containing at least one graft polymer of resin forming monomers on a rubber and optionally other thermoplastic synthetic resins, characterised by containing from 0.1 to 5% by weight, based on the moulding compound, of a hydrophobicized silica.

2. Elastic-thermoplastic moulding compounds according to Claim 1 in addition containing a nitrile rubber.

3. Use of the moulding compounds according to Claim 1 for the production of moulded products, in particular sheets or films and coatings having a uniformly matt surface, with substantially unaltered mechanical properties.

## Revendications

1. Matières à mouler thermoplastique-élastiques contenant au moins un polymère greffé de monomères formant des résines sur un caoutchouc et, le cas échéant, d'autres résines synthétiques thermoplastiques, caractérisées en ce qu'elles contiennent de 0,1 à 5 % de leur poids d'une silice hydrofugée.

2. Matières à mouler thermoplastique-élastiques selon la revendication 1, contenant en outre un caoutchouc nitrile.

3. Utilisation des matières à mouler selon la revendication 1 pour la fabrication d'objets moulés, en particulier de feuilles, et l'application de revêtements, à surface uniformément mate et autres propriétés pratiquement non modifiées.
